# EUROPÄISCHE PATENTSCHRIFT

(11) **EP 1 973 131 B1**
(45) Veröffentlichungstag und Bekanntmachung des Hinweises auf die Patenterteilung: **30.06.2010**
(21) Anmeldenummer: 08004671.7
(22) Anmeldetag: 13.03.2008
(51) Int. Cl.: H01H 13/83

(54) **Mehrwegschalter, insbesondere für Blinde**
Multiwayswitch, in particular for blind persons
Interrupteur multiple, en particulier pour aveugles

(30) Priorität: 17.03.2007 DE 202007004162 U
(43) Veröffentlichungstag der Anmeldung: 24.09.2008
(73) Patentinhaber: Beck, Wilfried, 65191 Wiesbaden (DE)
(72) Erfinder: Beck, Wilfried, 65191 Wiesbaden (DE)
(74) Vertreter: Aue, Hans-Peter

(56) Entgegenhaltungen:
- EP-A- 1 424 710
- WO-A-2005/039882
- DE-U1-202004 005 837

## Beschreibung

Die Erfindung bezieht sich auf einen Mehrwegeschalter, insbesondere für Blinde, mit einer Steuerelektronik zum Bewirken von Zustandsänderungen von mit jeweils einem individuellen Empfangselement versehenen Verbrauchern in einem Gebäudestromnetz.

Es ist allgemein bekannt, dass insbesondere im Bereich der Haustechnik eine Vielzahl von Verbrauchern, wie mehrere Lampen, Jalousien, Musikanlagen, Radios, Fernseh- und Videogeräte, Klimageräte, Alarmanlagen usw. in einem Raum oder in mehreren Bereichen nur über eine entsprechende Anzahl von Schaltern, gegebenenfalls Fernbedienungen, Displays usw. gesteuert werden, in dem die Schalter ihre Steuerbefehle an das zugeordnete Gerät senden. Hierbei sei beispielhaft nur auf die klassische Schaltung einer Lampe "Ein/Aus" mittels eines Wechselstrom-Wandschalters hingewiesen. Dem gemäß sind eine Vielzahl von Schaltern notwendig, deren Zahl umso größer ist, je größer die Anzahl der Räume und der Verbraucher ist. Hierbei soll unter dem Begriff "Schalter" jede Art von Schaltelement verstanden werden, das einen Schaltvorgang und eine Zustandsänderung des jeweiligen Verbrauchers bewirkt. Unter dem Begriff "Verbraucher" sind alle elektrisch steuerbaren Geräte zu verstehen.

In der Regel dient ein einzelner Schalter zum Schalten eines Verbrauchers. Dabei kann ein solcher Schalter aber auch mehrere Schaltvorgänge ausführen, z.B. "Ein/Aus" und "Dimmen". Bekannt sind auch Drehschalter, die Schaltvorgänge in mehreren Schaltstufen ausführen.

Zur Steuerung von mehreren Verbrauchern in einem Raum oder Bereich sind demnach Schalter mit einer höheren Anzahl von Sensoren und Tastern mit komplizierterem Aufbau und Untergliederung notwendig. Je vielzähliger und komplexer jedoch die Schalter sind, umso größer sind die Anforderungen bei der Bedienung an den Nutzer. Weiterhin sind solche Steuerungen auch über Sensor-Displaykombinationen bzw. Taster-Displaykombinationen möglich. Dabei stellt die Nutzung jedoch noch höhere Ansprüche an den Benutzer, da die Bedienung der gewünschten Schaltzustände und Funktionen nur über das Lesen der Displayinformationen in Kombination mit der Ausführung der Schalter möglich ist.

Umfangreiche Schaltermengen gegebenenfalls auch in Kombination mit Displays führen bei nicht wenigen Nutzern zu Verwirrung und Komplikationen beziehungsweise sogar zu Bedienungsängsten und Bedienungsablehnungen.

Ein weiterer Nachteil der bekannten Schalter ist, dass die auslösbaren Schaltfunktionen von blinden Personen gar nicht oder nur schwer erkennbar sind.

Aus der EP 1 424 710 B1 ist eine Steuervorrichtung für wenigstens zwei Funktionen eines Elementes und/oder wenigstens zwei verschiedener Elementteile mit einem beweglichen Schaltelement bekannt. Diese Steuervorrichtung enthält berührungssensitive Bereiche, die mit Berührungserkennungsmitteln ausgestattet sind, Mittel zum Aktivieren einer ersten Funktion eines Organs bzw. eines Teils dieses Organs, die mit den Berührungserkennungsmitteln gekoppelt sind, und Mittel, mit denen die aktivierte erste Funktion durch Verstellung des beweglichen Schaltelements gesteuert werden kann. Dabei enthält zumindest einer der berührungssensitiven Bereiche einen Greifabschnitt, um das bewegliche Schaltelement so zu verstellen, dass die durch Berührung des berührungssensitiven Bereichs aktivierte Funktion durch Verstellung des Schaltelements gesteuert wird. Die Berührungserkennungsmittel enthalten einen kapazitiven Sensor, der ebenso viele Erfassungsantennen aufweist wie zahlenmäßig berührungssensitive Bereiche vorhanden sind, wobei jede Antenne ein Kennsignal, eine Kennzeichnung bei Erfassung eines Berührungskontakts ausgibt, um diesen berührten berührungssensitiven Bereich lokalisieren zu können.

Weiterhin offenbart WO 2005/039882 A eine Tastatur für Blinde mit einer äußeren Drucktaste mit einer zu drückenden Oberfläche, welche mit einem Finger gedrückt werden kann und in die eine Öffnung eingebracht ist. Eine innere Drucktaste gleitet in der äußeren Drucktaste und weist selbst einen herausragenden Stift auf. Ein Federauslösemechanismus ermöglicht dem herausragenden Stift aus einer ersten festen Position, in welcher der Stift zurückgezogen ist und nicht aus der Oberfläche herausragt, in eine zweite feste Position zu gleiten, in welcher der Stift durch die Öffnung hindurchragt. Die Öffnung und der herausragende Stift sind in einer außermittigen Position in Bezug zur Oberfläche angeordnet, um das Lesen eines Braille-Buchstabens zu erleichtern. der unter Verwendung einer Matrix geschrieben wird, die sich aus verschiedenen Verbundtasten zusammensetzt.

Des Weiteren zeigt die DE 20 2004 005837 U1 ein Schaltergehäuse zur Aufputzmontage und zur Aufnahme eines elektronischen Moduls mit zumindest einem Modulgehäuse, auf das zumindest eine Schaltwippe montierbar ist, und mit zumindest einem Zwischenrahmen, der mit zumindest einer Bodenplatte verbindbar ist. Ein montierter Zustand wird dadurch gebildet, dass alle Elemente in der Reihenfolge, Schaltwippe, Modulgehäuse, Zwischenrahmen und Bodenplatte miteinander verbunden sind.

Es ist Aufgabe der Erfindung, einen Mehrwegeschalter der eingangs genannten Art zu schaffen, der eine sichere, komfortable und schnelle Steuerung mehrerer Verbraucher bzw. Gruppen von Verbrauchern ermöglicht, wobei die Steuerung insbesondere für blinde Personen leicht erkennbar, erlernbar und merkbar sein soll.

Erfindungsgemäß wird die Aufgabe gelöst durch
- ein Trägerelement,
- zumindest ein zu bedienendes Betätigungselement mit einer Mehrzahl von Betätigungsflächen, welches mittels einer Mehrzahl von Gummi- oder Kunststoffpuffern mit jeweils unterschiedlicher Härte und/oder Druckfedern mit jeweils unterschiedlicher Federkraft beweglich auf dem Trägerelement angebracht ist,
   - wobei jeder Gummi- oder Kunststoffpuffer bzw. jede Druckfeder einer bestimmten Betätigungsfläche des Betätigungselementes zugeordnet ist,
   - das Betätigungselement relativ zum Trägerelement in mindestens drei Richtungen bewegbar ist,
   - jede Betätigung des Betätigungselementes mindestens einen Schaltvorgang für mindestens einen Verbraucher oder mindestens einer Gruppe von Verbrauchern bewirkt, und
   - sämtliche Schaltvorgänge an den mindestens einen Verbraucher oder mindestens eine Gruppe von Verbrauchern durch lokale Betätigung des Betätigungselementes auslösbar sind.

Weitere Merkmale der Erfindung ergeben sich aus den Unteransprüchen.

Hierbei sind die Gummi- oder Kunststoffpuffer bzw. die Druckfedern zwischen dem Betätigungselement und dem Trägerelement angeordnet.

Gemäß einer Weiterbildung umfasst der Mehrwegeschalter
- ein Trägerelement,
- zumindest ein zu bedienendes Betätigungselement mit einer Mehrzahl von Betätigungsflächen, welches beweglich auf dem Trägerelement angebracht ist,
   - wobei jede Betätigungsfläche des Betätigungselementes ein für Blinde ertastbares Symbol aufweist,
   - das Betätigungselement relativ zum Trägerelement in mindestens drei Richtungen bewegbar ist,
   - jede Betätigung des Betätigungselementes mindestens einen Schaltvorgang für mindestens einen Verbraucher oder mindestens einer Gruppe von Verbrauchern bewirkt,
   - sämtliche Schaltvorgänge an den mindestens einen Verbraucher oder mindestens eine Gruppe von Verbrauchern durch lokale Betätigung des Betätigungselementes auslösbar ist.

Das Trägerelement kann nach Art eines Rahmens eines üblichen und dem Nutzer vertrauten und gewohnt einfachen Wandschalters ausgebildet sein und nimmt das einzige Betätigungselement beweglich auf. Dieses Betätigungselement, das die eigentliche Schalterplatte des Mehrwegeschalters darstellt, kann an den Ecken und Kanten und im Zentrum durch Druckbewegung betätigt werden, d.h. räumlich gesehen in alle möglichen Richtungen und nicht nur in X-, Y- und Z-Richtung, so dass der erfindungsgemäße Schalter als multidimensionaler Mehrwegeschalter wirkt und bei jeder Betätigung einen entsprechenden Schaltvorgang an einem entsprechenden Verbraucher oder einer Verbrauchergruppe auslöst. Dabei werden die Kanten, die Ecken und das Zentrum des Betätigungselementes des Mehrwegeschalters als Betätigungsflächen genutzt.

Das Betätigungselement kann ein einziges Betätigungselement mit mehreren Betätigungsflächen sein oder aber auch aus einer Mehrzahl von Betätigungselementen bestehen.

Der Mehrwegeschalter überträgt seine Schaltsignale vorzugsweise über das Gebäudestromnetz an eine Verbraucher oder eine Gruppe von Verbrauchern, die mit einem individuellen Empfangselement ausgerüstet sind. Dieses Empfangselement kann eine elektronische Einrichtung, beispielsweise Transponder oder ein Mikrochip sein, in dem eine codierte Kennung gespeichert ist, so dass nur der gewünschte Verbraucher auf den Schaltvorgang und die entsprechenden Steuerbefehle des Mehrwegeschalters reagiert.

Bei normalen, an sich bekannten Schaltern wird im Schalter durch eine mechanische Betätigung im Schalter selbst ein Stromkreis geschlossen. Bei dem erfindungsgemäßen Schalter ist das nicht der Fall. Vielmehr wird durch die mechanische Betätigung des Schalters eine Information aus einem Speicher, der sich in der Steuerelektronik im Schalter befindet, identifiziert, ausgewählt und diese Information wird im gesamten Gebäudestromnetz bereitgestellt und dann lokal vom Empfangselement im Verbraucher interpretiert.

Erfindungsgemäß können nun über einen einzigen Schalter ein einzelner Verbraucher, ein komplexer Verbraucher und eine oder mehrere Gruppen von gleichgearteten oder mehrgearteten Verbrauchern bedient und gesteuert werden. Das bedeutet, dass eine Lampe oder mehrere Lampen, auch Gruppen von Lampen sowie Jalousien, Gruppen von Jalousien, Alarmanlagen, Klimaanlagen, elektrische Hausgeräte, Audio- und Videogeräte, Fernsehgeräte usw. mit einem einzigen Mehrwegeschalter durch lokale Bewegung bzw. Berühren dessen Oberfläche über das Gebäudestromnetz geschaltet werden können. Natürlich kann in jedem Raum eines Bereiches ein solcher Mehrwegeschalter an der Wand des Raumes vorgesehen und mit dem Gebäudestromnetz verbunden werden. Dadurch lassen sich beliebige Verbraucher auch in anderen Räumen schalten und steuern. Die Bedienung erfolgt allein durch lokale Bewegung bzw. Berührung der Oberfläche des Mehrwegeschalters.

Obwohl Blinde in der Regel keine Lampen benötigen, können diese dennoch vorhanden sein, etwa für nichtblinde Besucher oder die Hausbeleuchtung usw..

Ein weiterer Vorteil des erfindungsgemäßen Mehrwegeschalters besteht darin, dass dieser sich optisch nicht von den an sich üblichen und bekannten Schaltern unterscheiden muss. So müssen die vielfältigen Bedienmöglichkeiten des Mehrwegeschalters für den Nutzer nicht ohne Weiteres erkennbar sein.

Die vielfältigen Schaltmöglichkeiten des Mehrwegeschalters für die Verbraucher ergeben sich durch die oberen und/oder unteren Bereiche, die rechten und/oder linken Bereiche und/oder den mittleren Bereich des Betätigungselementes, die allesamt zur Weitergabe von Steuerungsbefehlen verwendet werden. Somit kann durchaus ein Mehrwegeschalter mit neun Schalt- bzw. Tastflächen versehen sein.

Ein weiterer entscheidender Vorteil des Mehrwegeschalters ergibt sich dadurch, dass dessen Schaltfunktionen haptisch, d.h. durch Tastsinn von blinden Personen erfühlbar sind. Dies erfolgt durch die Mehrzahl von Gummi- oder Kunststoffpuffern mit jeweils unterschiedlicher Härte und/oder Druckfedern mit jeweils unterschiedlicher Federkraft zwischen dem Trägerelement und dem Betätigungselement, wobei jeder Betätigungsfläche ein solcher Puffer oder eine solche Druckfeder zugeordnet ist. Dadurch kann der Blinde beim Betätigen der Betätigungsflächen des Betätigungselementes durch die unterschiedlichen Druckwiderstände, die entsprechend zugeordnete Schaltfunktion in den Fingerspitzen spüren und erfühlen und wird auf diese Weise über die Art der Schaltfunktion informiert, denn jede Betätigungsfläche hat einen individuellen Druckwiderstand.

Ebenso vorteilhaft ist die Ausbildung des erfindungsgemäßen Mehrwegeschalters dadurch, dass jede Betätigungsfläche des Betätigungselementes ein für Blinde ertastbares Symbol aufweist. Dieses Symbol wird durch die Fingerspitzen der Hand einer blinden Person ertast, also haptisch erkannt.

Dem gemäß sind die für Blinde ertastbaren Symbole an den als Betätigungsflächen ausgebildeten Ecken und Kanten und im Zentrum des Betätigungselementes angebracht.

Die für Blinde ertastbaren Symbole sind insbesondere Symbole der Blindenschrift, nämlich der Brailleschrift oder des Moonalphabets, geometrische Formsymbole oder dergleichen.

Zweckmäßigerweise sind die für Blinde ertastbaren Symbole erhaben oder eingeprägt auf den Betätigungsflächen des Betätigungselementes angebracht.

Die Brailleschrift ist die am weitesten verbreitete Blindenschrift. Das Lesen erfolgt dabei mit dem Tastsinn der Finger der blinden Person. Hierbei gibt es zwei grundsätzliche Richtungen der Blindenschrift, nämlich die Reliefschrift, bei der die normalen Buchstaben tastbar gemacht werden, und die Punktschrift, die die Buchstaben in einen Code übersetzt. Die Braille-Schriftzeichen bestehen je nach Verwendung aus bis zu 6 oder 8 Punkten. In jedem fall sind die Punkte in zwei Spalten angeordnet. Häufig wird auch das Moonalphabet als Schriftsystem für Blinde verwendet. Die Schrift besteht aus Zeichen in Form geometrischer Symbole. Für Personen, die erst im Laufe ihres Lebens erblinden, ist diese Schrift besonders leicht erkennbar, da viele Symbole den Buchstaben des Alphabets ähneln. Gelesen wird die Moonschrift ebenfalls durch Abtasten mit den Fingern.

Weiterhin ist durch mehrfaches Betätigen des Betätigungselementes jeweils mindestens ein bestimmter Verbraucher bzw. jeweils mindestens eine bestimmte Gruppe von Verbrauchern auswählbar und für weitere Schaltvorgänge ansteuerbar.

Des Weiteren kann der erfindungsgemäße Mehrwegeschalter über Kabel des Gebäudestromnetzes und/oder kabellos über eine Fernbedienung mit dem mindestens einen Verbraucher oder mindestens eine Gruppe von Verbrauchern verbunden sein, d.h. Verbraucher werden über den Mehrwegeschalter und/oder über eine Fernbedienung gesteuert. Zu diesem Zweck kann die Steuerelektronik des Mehrwegeschalters mit einem Infrarotsensor versehen sein.

Ferner ist vorgesehen, dass mehr als eine Kante des Betätigungselementes mindestens einen Schaltvorgang für mindestens einen Verbraucher oder mindestens einer Gruppe von Verbrauchern bewirkt. Die oberen, unteren, rechten und linken Kanten des Betätigungselementes ermöglichen somit unterschiedliche Schaltvorgänge, die vom Nutzer intuitiv erkannt und benutzt werden. Die Kanten und das Zentrum des Betätigungselementes können beispielhaft und bevorzugt folgende Bedienfunktionen umfassen:

**(Tabelle 1)**

| **Kante/Zentrum** | **Funktionen** |
|---|---|
| Oben | plus, heller, höher, mehr, lauter, wärmer |
| Unten | minus, dunkler, tiefer, weniger, leiser, kälter |
| Links | links, zurück, letztes |
| Rechts | rechts, weiter, nächstes |
| Zentrum | An/Aus, Start/Stopp, Play/Pause, Kommen/Gehen |

Dabei beziehen sich die Schaltfunktionen nicht nur auf einen zu steuernden Verbraucher, beispielsweise ein Fernsehgerät, der an- bzw. auszuschalten ist, sondern auch auf andere Funktionen, wie den nächsten Fernsehkanal oder eine bestimmte Helligkeit des Bildschirms wählen. Bei einer Lampe kann dies beispielsweise die Steuerung der Helligkeit oder das Hinzufügen weiterer Lampen sein, bei einem CD-Player die Wahl des nächsten oder vorhergehenden Musiktitels, bei einer Jalousie die Einstellhöhe usw..

Des Weiteren bewirkt mehr als eine Ecke des Betätigungselementes mindestens einen Schaltvorgang für mindestens einen Verbraucher oder mindestens einer Gruppe von Verbrauchern. Demgemäß sind die Verbraucherarten den Ecken des Betätigungselementes des Mehrwegeschalters zugeordnet, beispielsweise wie folgt:

**(Tabelle 2)**

| **Ecke** | **Verbrauchergruppe** |
|---|---|
| Oben links | Beleuchtung (Lampen) |
| Oben rechts | Audio/Video (Fernseher, CD-PLayer usw.) |
| Unten links | Schatten (Jalousien) |
| Unten rechts | Sicherheit (Alarmanlage) |

Nach einer Weiterbildung des erfindungsgemäßen Mehrwegeschalters bewirkt das Zentrum des Betätigungselementes mindestens einen Schaltvorgang für mindestens einen Verbraucher oder mindestens einer Gruppe von Verbrauchern. Dabei wird eine Verbrauchergruppe, z.B. Lampen, in einer Ecke des Betätigungselements vorgewählt und dann bei Betätigung des Zentrums des Betätigungselementes z.B. ein Einschaltvorgang für die entsprechende Verbrauchergruppe gewählt.

Dem entsprechend bewirken mehr als eine Ecke und/oder mehr als eine Kante und/oder das Zentrum des Betätigungselementes mehr als einen Schaltvorgang für einen Verbraucher oder einer Gruppe von Verbrauchern.

Darüber hinaus ist vorgesehen, dass das Betätigungselement des Mehrwegeschalters relativ zum Trägerelement in mehr als eine Richtung, nämlich vorzugsweise in X-, Y- und Z-Richtung bewegbar oder um eine dieser Achsen drehbar ist.

Ein weiterer Vorteil des Mehrwegeschalters ergibt sich dadurch, dass zusätzlich zum Betätigungselement oder Trägerelement eine Fernbedienung vorgesehen ist, welche die Schaltvorgänge des Betätigungselementes für mindestens einen Verbraucher oder mindestens einer Gruppe von Verbrauchern bewirkt. Alle zuvor beschriebenen Funktionen können somit auch durch eine Fernbedienung realisiert werden. Der Nutzer kann daher die Funktionen des Mehrwegeschalters bequem beispielsweise aus einem vom Mehrwegeschalter entfernten Ort eines Raumes oder Bereiches nutzen und die Verbraucher schalten und steuern. Als Fernbedienung kann beispielsweise auch ein Mobiltelefon verwendet werden.

Um auch eine Fernbedienung vollständig für Schaltvorgänge benutzen zu können, weisen die Tasten der Fernbedienung für Blinde ertastbare Symbole auf, in der Art, wie sie zuvor beschrieben wurde.

Ein wesentliches Hilfsmittel des Mehrwegeschalters kann sein, dass dieser zusätzlich unterschiedliche Audiosignale erzeugt, welche die jeweiligen Schaltzustände signalisieren. Die Audiosignale können sich somit in Klanghöhe und/oder Klanglänge und/oder Klangton unterscheiden.

Gemäß einer Weiterbildung des erfindungsgemäß Mehrwegeschalters weist dieser einen Drehwahlknopf zur Bestimmung bzw. Auswahl des zu bedienenden mindestens einen Verbrauchers oder mindestens einer Gruppe von Verbrauchern auf. Damit wird die Auswahl des zu bedienenden Verbrauchers oder einer Gruppe von Verbrauchern über das Drehen und Drücken des Drehwahlknopfs ermöglicht. Dieses runde Betätigungselement ist zum Wippen in mehreren Richtungen geeignet. Hierfür wären dann andere Bezugspunkte zu definieren, beispielsweise nach Art eines Uhrenzifferblattes. So können beispielsweise die "Kanten" als 3, 6, 9 und 12 Uhr bezeichnet und entsprechend am Betätigungselement ausgebildet sein. In analoger Weise könnten die "Ecken" am Umfang des Mehrwegeschalters definiert werden. Auch bei dieser Ausbildung des Mehrwegeschalters ist der Drehwahlknopf mit für Blinde erkennbaren Symbolen versehen.

Weiterhin kann der Mehrwegeschalter einen Berührungs-, Näherungs- oder Bewegungssensor aufweisen, so dass der Schalter durch Annäherung des Nutzers in Funktions- und Schaltbereitschaft setzbar ist.

Bevorzugt kann der erfindungsgemäße Mehrwegeschalter beispielsweise in einem Gebäudestromnetz eingebaut sein. Unter einem Gebäudestromnetz wird in diesem Fall der Teil eines Stromnetzes verstanden, der sich nach dem Zähler des Stromversorgungsunternehmens befindet, und an dem die Verbraucher angeschlossen sind, wobei es unerheblich ist, welchen Charakter ein solches Gebäude hat. Umfasst sind also sowohl feste Gebäude, als auch auf- und abbaubare Gebäude oder Zelte, die mit einem eigenen Stromnetz versorgt werden. Hierunter fallen auch Stromnetze, welche für Veranstaltungen in möglicherweise auch offen gestalteten Gebäuden, wie z.B. Bühnen, dauerhaft bestehen oder situativ auf- und wieder abgebaut werden. Wesentlich ist alleine, dass sich ein erfindungsgemäßer Mehrwegeschalter in diesem Teil des Gebäudestromnetzes befindet und bereit steht, erfindungsgemäße Wirkung zu entfalten.

Darüber hinaus kann der erfindungsgemäße Mehrwegeschalter in eine Wohneinheit eingebaut sein, auch ohne an ein zuvor definiertes Gebäudestromnetz angeschlossen zu sein. Dies ist beispielsweise der Fall, wenn die erfindungsgemäßen Schaltern in einem Netz verbaut sind, in welches nicht, wie zuvor definiert, ein Zähler eines Stromversorgungsunternehmens eingebaut ist. Dies ist zunehmend in Gebäuden der Fall, die ihren Strom, beispielsweise durch Blockkraftwerke, unabhängig von Stromversorgern selbst produzieren.

Die Funktionen des Mehrwegeschalters können neben einem Wechselstromnetz natürlich auch in einem Gleichstromnetz, einem Bussystem und weiterhin zur Übermittlung von Funksignalen verwendet werden.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Der der Erfindung zugrunde liegende Gedanke wird in der nachfolgenden Beschreibung anhand eines Ausführungsbeispieles, das in den Zeichnungen dargestellt ist, näher beschrieben. Es zeigt:

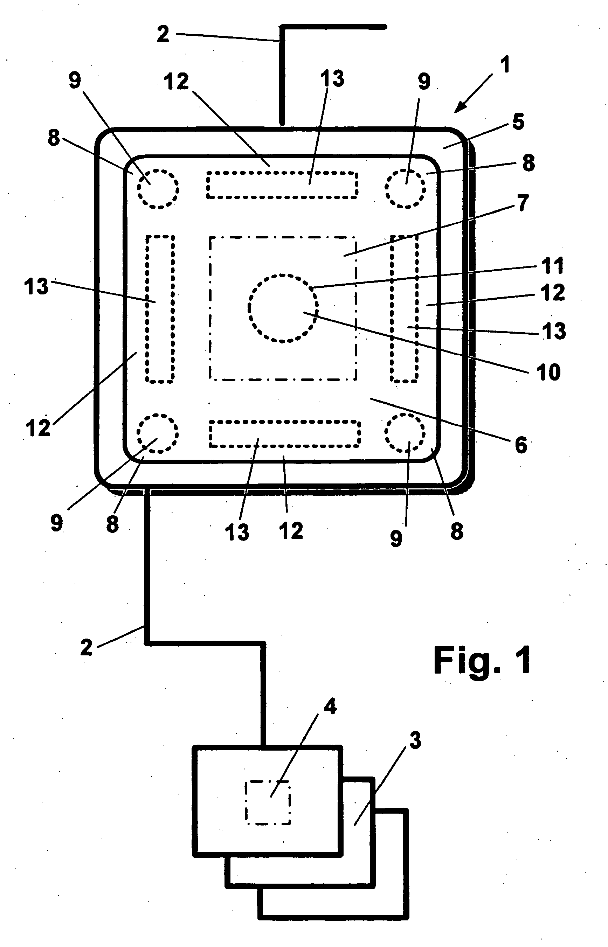

- Fig. 1: einen erfindungsgemäßen Mehrwegeschalter in Verbindung mit einer Verbrauchergruppe,

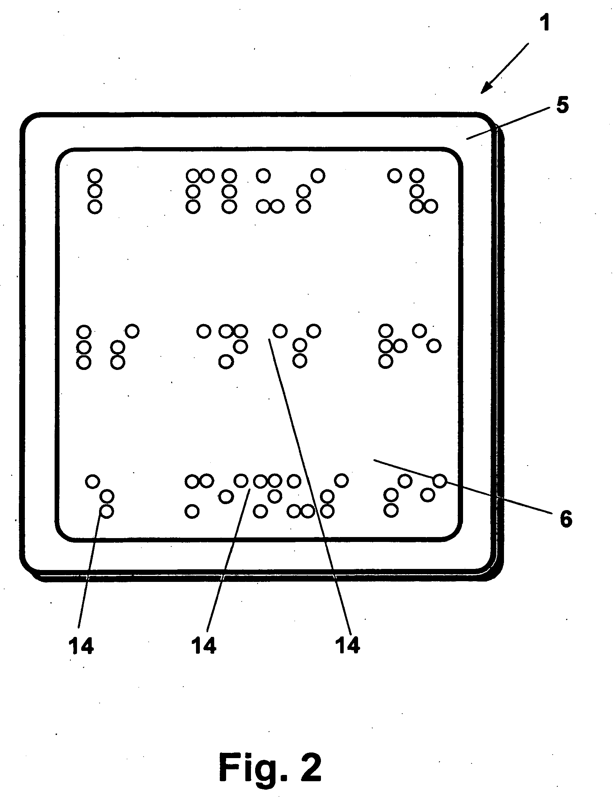

- Fig. 2: eine Mehrwegeschalter mit für Blinde erkennbaren Symbolen,
- Fig. 3: eine Tabelle von Symbolen der Braille-Blindenschrift und
- Fig. 4: eine Tabelle von Symbolen des Moonalphabets.

Der Mehrwegeschalter 1 ist an einer Wand eines Raumes angebracht und direkt oder per Infrarot/Bussystem oder per Funk an ein Gebäudestromnetz 2 angeschlossen. Darüber hinaus ist der Mehrwegeschalter 1 über das Gebäudestromnetz 2 mit einer oder mehreren Gruppen von Verbrauchern 3 verbunden, die in der Zeichnung symbolhaft dargestellt sind. Jeder Verbraucher 3 enthält ein codiertes Empfangselement 4, z.B. einen Mikrochip, zum Empfang der Schaltsignale des Mehrwegeschalters 1.

Der Mehrwegeschalter 1 weist ein Trägerelement 5 auf, das den Rahmen des Mehrwegeschalters 1 bildet. Am Trägerelement 5 ist vorzugsweise ein einziges zu bedienendes Betätigungselement 6 angebracht, das mit einer dahinter eingebauten Steuerelektronik 7 in Kontaktverbindung steht. Die Ecken 8 des Betätigungselementes 6 sind jeweils als Betätigungsflächen 9 ausgebildet, mit denen jeweils ein bestimmter zu schaltender Verbraucher 3 oder jeweils eine bestimmte zu schaltende Gruppe von Verbrauchern 3 ausgewählt und geschaltet werden kann.

Die Betätigungsflächen 9, 11 und 13 sind in der Zeichnung symbolisiert durch die punktierten Linien.

Die obere linke Betätigungsfläche 9 in der Ecke 8 dient zum Auswählen für die Verbrauchergruppe "Lampen" zum Schalten von Lampen, die obere rechte Betätigungsfläche 9 in der Ecke 8 ist für die Verbrauchergruppe "Audio/Video" zum Schalten von elektronischen Unterhaltungsgeräten vorgesehen, die untere linke Betätigungsfläche 9 in der Ecke 8 dient zum Auswählen für die Verbrauchergruppe "Schatten" zum Schalten von Jalousien und die untere rechte Betätigungsfläche 9 in der Ecke 8 ist für die Verbrauchergruppe "Sicherheit" zum Schalten für die Alarmanlage vorgesehen (Tabelle 2). Diese Zuordnung ist nur beispielhaft genannt, wobei die Betätigungsflächen 9 auch in anderer Weise zugeordnet sein können.

Das Zentrum 10 des Betätigungselementes 6 dient als Betätigungsfläche 11 dem Schalten des bzw. der Verbraucher 3 bzw. einer Gruppe von Verbrauchern 3, insbesondere von Schaltgrundfunktionen, wie "An/Aus", "Start/Stopp" usw. des momentan aktiven Verbrauchers 3 oder der momentan aktiven Verbrauchergruppe 3 gemäß Tabelle 2.

Weiterhin sind an den vier Seiten des Betätigungselementes 6 die Kanten 12 des Mehrwegeschalters 1 zum Auslösen von Schaltvorgängen für einen Verbraucher 3 oder einer Gruppe von Verbrauchern 3, wobei die Kanten 12 entsprechende Betätigungsflächen 13 aufweisen. Durch Betätigen beispielsweise der Betätigungsfläche 13 der rechten Kante des Betätigungselementes 6 des Mehrwegeschalters 1 werden die Schaltfunktionen "rechts, weiter, nächstes" ausgelöst. Bei Betätigung der anderen Betätigungsflächen 13 der Kanten 12 des Betätigungselementes 6 werden die in Tabelle 1 genannten Schaltfunktionen ausgeführt.

Zwischen dem Betätigungselement 6 und dem Trägerelement 5 sind nicht näher dargestellte Gummi- oder Kunststoffpuffer bzw. Druckfedern angeordnet, die jeweils einer Betätigungsfläche 9, 11, bzw. 13 zugeordnet sind. Diese Mehrzahl von Gummi- oder Kunststoffpuffer weisen eine jeweils unterschiedlicher Härte auf. Im Falle der Verwendung von Druckfedern besitzen diese jeweils eine unterschiedliche Federkraft.

Weiterhin weist jede Betätigungsfläche 9, 11 und 13 des Betätigungselementes 6 ein für Blinde ertastbares Symbol 14 auf. Diese ertastbaren Symbole 14 sind an den als Betätigungsflächen 9, 11 und 13 ausgebildeten Ecken 8 und Kanten 12 und im Zentrum 10 des Betätigungselementes 6 angebracht.

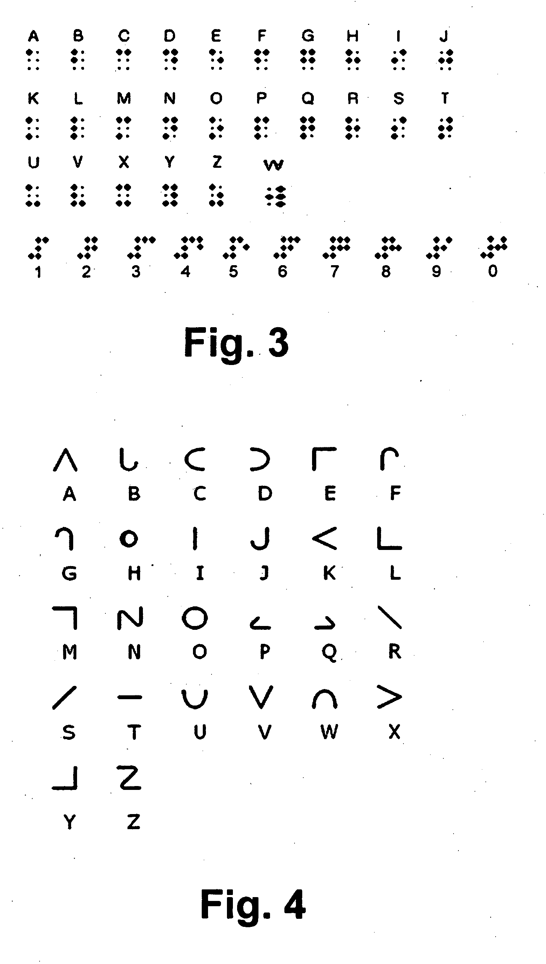

Die für Blinde ertastbaren Symbole 14 sind insbesondere Symbole der Blindenschrift gemäß Fig. 3, nämlich der Brailleschrift oder des Moonalphabets gemäß Fig. 4. Darüber hinaus können diese Symbole 14 stattdessen oder zusätzlich auch geometrische Formsymbole oder dergleichen sein. Des Weiteren können die für Blinde ertastbaren Symbole 14 erhaben oder eingeprägt auf den Betätigungsflächen 9, 11 und 13 des Betätigungselementes 5 angebracht sein.

### Liste der Bezugszeichen

- 1: Schalter
- 2: Gebäudestromnetz
- 3: Verbraucher
- 4: Empfangselement
- 5: Trägerelement
- 6: Betätigungselement
- 7: Steuerelektronik
- 8: Ecke
- 9: Betätigungsfläche
- 10: Zentrum
- 11: Betätigungsfläche
- 12: Kante
- 13: Betätigungsfläche
- 14: Symbol

## Patentansprüche

1. Mehrwegeschalter (1), insbesondere für Blinde, mit einer Steuerelektronik (7) zum Bewirken von Zustandsänderungen von mit jeweils einem individuellen Empfangselement (4) versehenen Verbrauchern (3) in einem Gebäudestromnetz (2), **gekennzeichnet durch**
- ein Trägerelement (5),
- zumindest ein zu bedienendes Betätigungselement (6) mit einer Mehrzahl von Betätigungsflächen (9,11,13), welches mittels einer Mehrzahl von Gummi- oder Kunststoffpuffern mit jeweils unterschiedlicher Härte und/oder Druckfedern mit jeweils unterschiedlicher Federkraft beweglich auf dem Trägerelement (5) angebracht ist,
- wobei jeder Gummi- oder Kunststoffpuffer bzw. jede Druckfeder einer bestimmten Betätigungsfläche (9,11,13) des Betätigungselementes (6) zugeordnet ist,
- das Betätigungselement (6) relativ zum Trägerelement (5) in mindestens drei Richtungen bewegbar ist,
- jede Betätigung des Betätigungselementes (6) mindestens einen Schaltvorgang für mindestens einen Verbraucher (3) oder mindestens einer Gruppe von Verbrauchern (3) bewirkt, und
- sämtliche Schaltvorgänge an den mindestens einen Verbraucher (3) oder mindestens eine Gruppe von Verbrauchern (3) durch lokale Betätigung des Betätigungselementes (6) auslösbar sind.

2. Mehrwegeschalter nach Anspruch 1, **dadurch gekennzeichnet, dass** die Gummi- oder Kunststoffpuffer bzw. die Druckfedern zwischen dem Betätigungselement (6) und dem Trägerelement (5) angeordnet sind.

3. Mehrwegeschalter nach Anspruch 1, **gekennzeichnet durch**
- ein Trägerelement (5),
- zumindest ein zu bedienendes Betätigungselement (6) mit einer Mehrzahl von Betätigungsflächen (9,11,13), welches beweglich auf dem Trägerelement (5) angebracht ist,
- wobei jede Betätigungsfläche (9,11,13) des Betätigungselementes (6) ein für Blinde ertastbares Symbol (14) aufweist,
- das Betätigungselement (6) relativ zum Trägerelement (5) in mindestens drei Richtungen bewegbar ist,
- jede Betätigung des Betätigungselementes (6) mindestens einen Schaltvorgang für mindestens einen Verbraucher (3) oder mindestens einer Gruppe von Verbrauchern (3) bewirkt,
- sämtliche Schaltvorgänge an den mindestens einen Verbraucher (3) oder mindestens eine Gruppe von Verbrauchern (3) durch lokale Betätigung des Betätigungselementes (6) auslösbar ist.

4. Mehrwegeschalter nach Anspruch 3, **dadurch gekennzeichnet, dass** die für Blinde ertastbaren Symbole (14) an den als Betätigungsflächen (9,11,13) ausgebildeten Ecken (9) und Kanten (12) und im Zentrum (10) des Betätigungselementes (6) angebracht sind.

5. Mehrwegeschalter nach Anspruch 3 oder 4, **dadurch gekennzeichnet, dass** die für Blinde ertastbaren Symbole (14) insbesondere Symbole der Blindenschrift, nämlich der Brailleschrift oder des Moonalphabets, geometrische Formsymbole oder dergleichen sind.

6. Mehrwegeschalter nach einem der Ansprüche 3 oder 4, **dadurch gekennzeichnet, dass** die für Blinde ertastbaren Symbole (14) erhaben oder eingeprägt auf den Betätigungsflächen (9,11,13) des Betätigungselementes (6) angebracht sind.

7. Mehrwegeschalter nach einem der Ansprüche 1 bis 6, **dadurch gekennzeichnet, dass** durch mehrfaches Betätigen des Betätigungselementes (6) jeweils mindestens ein bestimmter Verbraucher (3) bzw. jeweils mindestens eine bestimmte Gruppe von Verbrauchern (3) auswählbar und für weitere Schaltvorgänge ansteuerbar ist.

8. Mehrwegeschalter nach einem der Ansprüche 1 bis 7, **dadurch gekennzeichnet, dass** dieser über Kabel des Gebäudestromnetzes (2) und/oder kabellos über eine Fernbedienung mit dem mindestens einen Verbraucher (3) oder mindestens eine Gruppe von Verbrauchern (3) verbunden ist.

9. Mehrwegeschalter nach einem der Ansprüche 1 bis 8, **dadurch gekennzeichnet, dass** mehr als eine Kante (12) des Betätigungselementes (6) mindestens einen Schaltvorgang für mindestens einen Verbraucher (3) oder mindestens einer Gruppe von Verbrauchern (3) bewirkt.

10. Mehrwegeschalter nach einem der Ansprüche 1 bis 9, **dadurch gekennzeichnet, dass** mehr als eine Ecke (8) des Betätigungselementes (6) mindestens einen Schaltvorgang für mindestens einen Verbraucher (3) oder mindestens einer Gruppe von Verbrauchern (3) bewirkt.

11. Mehrwegeschalter nach einem der Ansprüche 1 bis 10, **dadurch gekennzeichnet, dass** das Zentrum (10) des Betätigungselementes (6) mindestens einen Schaltvorgang für mindestens einen Verbraucher (3) oder mindestens einer Gruppe von Verbrauchern (3) bewirkt.

12. Mehrwegeschalter nach einem der Ansprüche 1 bis 11, **dadurch gekennzeichnet, dass** mehr als eine Ecke (8) und/oder mehr als eine Kante (12) und/oder das Zentrum (10) des Betätigungselementes (6) mehr als einen Schaltvorgang für mindestens einen Verbraucher (3) oder mindestens einer Gruppe von Verbrauchern (3) bewirken.

13. Mehrwegeschalter nach einem der Ansprüche 1 bis 12, **dadurch gekennzeichnet, dass** das Betätigungselement (6) relativ zum Trägerelement (5) in mehr als eine Richtung, nämlich vorzugsweise in X-, Y- und Z-Richtung, bewegbar oder um eine dieser Achsen drehbar ist.

14. Mehrwegeschalter nach einem der Ansprüche 1 bis 13, **dadurch gekennzeichnet, dass** zusätzlich zum Betätigungselement (6) oder Trägerelement (5) eine Fernbedienung vorgesehen ist, welche die Schaltvorgänge des Betätigungselementes (6) für mindestens einen Verbraucher (3) oder mindestens einer Gruppe von Verbrauchern (3) bewirkt.

15. Mehrwegeschalter nach Anspruch 14, **dadurch gekennzeichnet, dass** die Tasten der Fernbedienung für Blinde ertastbare Symbole aufweisen.

16. Mehrwegeschalter nach einem der Ansprüche 1 bis 15, **dadurch gekennzeichnet, dass** dieser zusätzlich unterschiedliche Audiosignale erzeugt, welche die jeweiligen Schaltzustände signalisieren.

17. Mehrwegeschalter nach einem der Ansprüche 1 bis 16, **dadurch gekennzeichnet, dass** dieser einen Drehwahlknopf zur Bestimmung bzw. Auswahl des zu bedienenden mindestens einen Verbrauchers (3) oder mindestens einer Gruppe von Verbrauchern (3) aufweist.

18. Mehrwegeschalter nach einem der Ansprüche 1 bis 17, **dadurch gekennzeichnet, dass** dieser einen Berührungs-, Näherungs- oder Bewegungssensor aufweist, so dass der Mehrwegeschalter (1) durch Annäherung des Nutzers in Funktions- und Schaltbereitschaft setzbar ist.

19. Gebäudestromnetz nach einem der vorhergehenden Ansprüche, umfassend mindestens einen Mehrwegeschalter (1) mit einer Steuerelektronik (7) zum Bewirken von Zustandsänderungen von mit jeweils einem individuellen Empfangselement (4) versehenen Verbrauchern (3) in dem Gebäudestromnetz (2).

20. Wohneinheit nach Anspruch 14, umfassend mindestens ein Gebäudestromnetz mit mindestens einem Mehrwegeschalter (1) mit einer Steuerelektronik (7) zum Bewirken von Zustandsänderungen von mit jeweils einem individuellen Empfangselement (4) versehenen Verbrauchern (3) in dem Gebäudestromnetz (2).

## Claims

1. A multi-directional switch (1), in particular for blind people, with control electronics (7) for causing state changes in electronic devices (3) each fitted with an individual receiving element (4) in a building electricity network (2), **characterised by**
- a carrying element (5),
- at least one actuating element (6) to be operated with a number of actuating surfaces (9,11,13), which is arranged mobile on the carrying element (5) via a large number of rubber or synthetic pads each of different hardness and/or pressure springs each of different resilience,
- wherein each rubber or synthetic pad and/or each pressure spring is allocated to a defined actuating surface (9,11,13) of the actuating element (6),
- the actuating element (6) is mobile relative to the carrying element (5) in at least three directions,
- every actuation of the actuating element (6) triggers at least one switching process for at least one electronic device (3) or at least one group of electronic devices (3), and
- all the switching processes can be initiated from at least one electronic device (3) or at least one group of electronic devices (3) by local actuation of the actuating element (6).

2. A multi-directional switch according to claim 1, **characterised in that** the rubber or synthetic pad and/or the pressure springs are arranged between the actuating element (6) and the carrying element (5).

3. A multi-directional switch according to claim 1, **characterised in**
- a carrying element (5),
- at least one actuating element (6) to be operated with a number of actuating surfaces (9,11,13), which is arranged mobile on the carrying element (5),
- wherein each actuating surface (9,11,13) of the actuating element (6) includes a symbol (14) detectable by blind people,
- the actuating element (6) is mobile relative to the carrying element (5) in at least three directions,
- every actuation of the actuating element (6) triggers at least one switching process for at least one electronic device (3) or at least one group of electronic devices (3),
- all the switching processes can be initiated from at least one electronic device (3) or at least one group of electronic devices (3) by local actuation of the actuating element (6).

4. A multi-directional switch according to claim 3, **characterised in that** the symbols (14) detectable by blind people are arranged in corners (9) and edges (12) formed as actuating surfaces (9,11,13) and in the centre (10) of the actuating element (6).

5. A multi-directional switch according to claim 3 or 4, **characterised in that** the symbols (14) detectable by blind people are in particular blind people writing symbols, namely Braille writing or Moon alphabet, geometrical form symbols or similar.

6. A multi-directional switch according to one of the claims 3 or 4, **characterised in that** the symbols (14) detectable blind people are raised or impressed on the actuating surfaces (9,11,13) of the actuating element (6).

7. A multi-directional switch according to one of the claims 1 to 6, **characterised in that** at least one precise electronic device (3) and/or at least one precise group of electronic devices (3) can be selected and controlled for more switching processes by repeated operation of the actuating element (6).

8. A multi-directional switch according to one of the claims 1 to 7, **characterised in that** said switch is connected using cables of the building electricity network (2) and/or cable-free via a remote control with said at least one electronic device (3) or at least one group of electronic devices (3).

9. A multi-directional switch according to one of the claims 1 to 8, **characterised in that** more than one edge (12) of the actuating element (6) triggers at least one switching process for at least one electronic device (3) or at least one group of electronic devices (3).

10. A multi-directional switch according to one of the claims 1 to 9, **characterised in that** more than one corner (8) of the actuating element (6) triggers at least one switching process for at least one electronic device (3) or at least one group of electronic devices (3).

11. A multi-directional switch according to one of the claims 1 to 10, **characterised in that** the centre (10) of the actuating element (6) triggers at least one switching process for at least one electronic device (3) or at least one group of electronic devices (3).

12. A multi-directional switch according to one of the claims 1 to 11, **characterised in that** more than one corner (8) and/or more than one edge (12) and/or the centre (10) of the actuating element (12) triggers more than one switching process for at least one electronic device (3) or at least one group of electronic devices (3).

13. A multi-directional switch according to one of the claims 1 to 12, **characterised in that** the actuating element (6) is mobile relative to the carrying element (5) in more than one direction, namely preferably in direction X, Y and Z, or rotary around one of these axes.

14. A multi-directional switch according to one of the claims 1 to 13, **characterised in that** in addition to the actuating element (6) or carrying element (5) a remote control is provided, which triggers the switching processes of the actuating element (6) for at least one electronic device (3) or at least one group of electronic devices (3).

15. A multi-directional switch according to claim 14, **characterised in that** the keys of the remote control include symbols detectable by blind people.

16. A multi-directional switch according to one of the claims 1 to 15, **characterised in that** the former additionally generates different audio signals, which signal the corresponding switching states.

17. A multi-directional switch according to one of the claims 1 to 16, **characterised in that** the former exhibits a rotary selector switch for setting or selecting the at least one electronic device (3) to be operated or at least one group of electronic devices (3).

18. A multi-directional switch according to one of the claims 1 to 17, **characterised in that** the former exhibits a tactile, proximity or motion sensor, so that the multi-directional switch (1) becomes ready for operation and switching purposes when the user is approaching.

19. A building electricity network according to any of the preceding claims, including at least one multi-directional switch (1), with control electronics (7) for causing state changes in electronic devices (3) each fitted with an individual receiving element (4) in a building electricity network (2).

20. A residential unit according to claim 14, including at least one building electricity network with at least one multi-directional switch (1) with control electronics (7) for causing state changes in electronic devices (3) each fitted with an individual receiving element (4) in a building electricity network (2).

## Revendications

1. Interrupteur à plusieurs voies (1), en particulier pour aveugles, comprenant une électronique de commande (7) pour provoquer des changements d'état d'appareils consommateurs (3) dans un réseau (2) d'un bâtiment, qui sont pourvus chacun d'un élément récepteur individuel (4), **caractérisé par**
- un élément porteur (5),
- au moins un élément de manoeuvre (6) à actionner, ayant une pluralité de surfaces d'actionnement (9, 11, 13), qui est monté de manière mobile sur ledit élément porteur (5) par l'intermédiaire d'une pluralité de tampons en caoutchouc ou en matière plastique de dureté respectivement différente et/ou par l'intermédiaire de ressorts de compression à élasticité respectivement différente,
- chaque tampon en caoutchouc ou en matière plastique ou bien chaque ressort de compression étant associé à une surface d'actionnement déterminée (9, 11, 13) dudit élément de manoeuvre (6),
- ledit élément de manoeuvre (6) étant déplaçable relativement à l'élément porteur (5) selon au moins trois directions,
- chaque actionnement de l'élément de manoeuvre (6) provoquant au moins une commutation pour au moins un appareil consommateur (3) ou pour au moins un groupe d'appareils consommateurs (3), et
- toutes les opérations de commutation sur ledit au moins un appareil consommateur (3) ou ledit au moins un groupe d'appareils consommateurs (3) pouvant être déclenchées en actionnant localement ledit élément de manoeuvre (6).

2. Interrupteur à plusieurs voies selon la revendication 1, **caractérisé par le fait que** lesdits tampons en caoutchouc ou en matière plastique ou bien lesdits ressorts de compression sont disposés entre ledit élément de manoeuvre (6) et ledit élément porteur (5).

3. Interrupteur à plusieurs voies selon la revendication 1, **caractérisé par**
- un élément porteur (5),
- au moins un élément de manoeuvre (6) à actionner, ayant une pluralité de surfaces d'actionnement (9, 11, 13), qui est monté de manière mobile sur ledit élément porteur (5),
- chaque surface d'actionnement (9, 11, 13) dudit élément de manoeuvre (6) présentant un symbole (14) tactiles pour aveugles,
- ledit élément de manoeuvre (6) étant déplaçable relativement à l'élément porteur (5) selon au moins trois directions,
- chaque actionnement de l'élément de manoeuvre (6) provoquant au moins une commutation pour au moins un appareil consommateur (3) ou pour au moins un groupe d'appareils consommateurs (3),
- toutes les opérations de commutation sur ledit au moins un appareil consommateur (3) ou ledit au moins un groupe d'appareils consommateurs (3) pouvant être déclenchées en actionnant localement ledit élément de manoeuvre (6).

4. Interrupteur à plusieurs voies selon la revendication 3, **caractérisé par le fait que** les symboles tactiles (14) pour aveugles sont disposés aux coins (9) et sur les bords (12) réalisés comme surfaces d'actionnement (9, 11, 13) ainsi qu'au centre (10) de l'élément de manoeuvre (6).

5. Interrupteur à plusieurs voies selon la revendication 3 ou 4, **caractérisé par le fait que** les symboles tactiles (14) pour aveugles sont, en particulier, des symboles de l'écriture pour aveugles, à savoir de l'écriture braille ou de l'alphabet Moon, des symboles de forme géométriques ou similaires.

6. Interrupteur à plusieurs voies selon l'une quelconque des revendications 3 ou 4, **caractérisé par le fait que** les symboles tactiles (14) pour aveugles sont disposés en relief ou en creux sur les surfaces d'actionnement (9, 11, 13) de l'élément de manoeuvre (6).

7. Interrupteur à plusieurs voies selon l'une quelconque des revendications 1 à 6, **caractérisé par le fait que**, en actionnant à plusieurs reprises ledit élément de manoeuvre (6), on peut choisir respectivement au moins un appareil consommateur déterminé (3) ou bien respectivement au moins un groupe déterminé d'appareils consommateurs (3) et commander celui-ci pour d'autres opérations de commutation.

8. Interrupteur à plusieurs voies selon l'une quelconque des revendications 1 à 7, **caractérisé par le fait qu'**il est connecté par l'intermédiaire de câbles du réseau (2) du bâtiment et/ou sans câbles, via une télécommande, audit au moins un appareil consommateur (3) ou audit au moins un groupe d'appareils consommateurs (3).

9. Interrupteur à plusieurs voies selon l'une quelconque des revendications 1 à 8, **caractérisé par le fait que** plus d'un bord (12) de l'élément de manoeuvre (6) provoque au moins une opération de commutation pour au moins un appareil consommateur (3) ou au moins un groupe d'appareils consommateurs (3).

10. Interrupteur à plusieurs voies selon l'une quelconque des revendications 1 à 9, **caractérisé par le fait que** plus d'un coin (8) de l'élément de manoeuvre (6) provoque au moins une opération de commutation pour au moins un appareil consommateur (3) ou au moins un groupe d'appareils consommateurs (3).

11. Interrupteur à plusieurs voies selon l'une quelconque des revendications 1 à 10, **caractérisé par le fait que** le centre (10) de l'élément de manoeuvre (6) provoque au moins une opération de commutation pour au moins un appareil consommateur (3) ou au moins un groupe d'appareils consommateurs (3).

12. Interrupteur à plusieurs voies selon l'une quelconque des revendications 1 à 11, **caractérisé par le fait que** plus d'un coin (8) et/ou plus d'un bord (12) et/ou le centre (10) de l'élément de manoeuvre (6) provoquent plus d'une opération de commutation pour au moins un appareil consommateur (3) ou au moins un groupe d'appareils consommateurs (3).

13. Interrupteur à plusieurs voies selon l'une quelconque des revendications 1 à 12, **caractérisé par le fait que** l'élément de manoeuvre (6) est déplaçable relativement à l'élément porteur (5) selon plus d'une direction, à savoir, de préférence, selon les direction X, Y et Z, ou est tournant autour de l'un de ces axes.

14. Interrupteur à plusieurs voies selon l'une quelconque des revendications 1 à 13, **caractérisé par le fait que**, en plus de l'élément de manoeuvre (6) ou de l'élément porteur (5), on prévoit une télécommande qui provoque les opérations de commutations de l'élément de manoeuvre (6) pour au moins un appareil consommateur (3) ou au moins un groupe d'appareils consommateurs (3).

15. Interrupteur à plusieurs voies selon la revendication 14, **caractérisé par le fait que** les touches de ladite télécommande présentent des symboles tactiles pour aveugles.

16. Interrupteur à plusieurs voies selon l'une quelconque des revendications 1 à 15, **caractérisé par le fait que**, en sus, il génère des signaux audio différents qui signalent les états respectifs de commutation.

17. Interrupteur à plusieurs voies selon l'une quelconque des revendications 1 à 16, **caractérisé par le fait qu'**il comprend un bouton rotatif de sélection pour déterminer ou bien choisir ledit au moins un appareil consommateur (3) à actionner ou ledit au moins un groupe d'appareils consommateurs (3) à actionner.

18. Interrupteur à plusieurs voies selon l'une quelconque des revendications 1 à 17, **caractérisé par le fait qu'**il présente un capteur de contact, de proximité ou de mouvement de sorte que ledit interrupteur à plusieurs voies (1) peut être mis en état prêt à fonctionner et à commuter **par le fait que** l'utilisateur s'approche.

19. Réseau de bâtiment selon l'une quelconque des revendications précédentes, comprenant au moins un interrupteur à plusieurs voies (1) présentant une électronique de commande (7) pour provoquer des changements d'état d'appareils consommateurs (3) dans ledit réseau de bâtiment (2), qui sont pourvus chacun d'un élément récepteur individuel (4).

20. Unité d'habitation selon la revendication 14, comprenant au moins un réseau de bâtiment avec au moins un interrupteur à plusieurs voies (1) présentant une électronique de commande (7) pour provoquer des changements d'état d'appareils consommateurs (3) dans ledit réseau de bâtiment (2), qui sont pourvus chacun d'un élément récepteur individuel (4).
